# EUROPEAN PATENT APPLICATION

(11) **EP 2 589 820 A1**
(43) Date of publication of application: **08.05.2013**
(21) Application number: 11800597.4
(22) Date of filing: 09.06.2011
(51) Int. Cl.: F04D 29/58, F04D 29/28, F04D 29/66

(54) **AIR BLOWER DEVICE**

(30) Priority: 02.07.2010 JP 2010151875
(71) Applicant: Daikin Industries, Ltd., Osaka 530-8323 (JP)
(72) Inventor: ISHII, Shinji, Kusatsu-shi Shiga 525-8526 (JP); NAGAO, Mitsuhisa, Kusatsu-shi Shiga 525-8526 (JP)
(74) Representative: HOFFMANN EITLE
(86) International application number: PCT/JP2011/063279
(87) International publication number: WO 2012/002129

(57) **Abstract**

A blower device, wherein an object thereof is to reduce blowing noise presumed to be due to interference between air flowing along a hub and air flowing out through openings. In a blower device (10), a fan rotor (20) is a sirocco fan configured from a hub (25), a main plate (29), and a plurality of fan blades (26). In the blower device (10), openings (24a) are provided in the lower part (non-indrawing side) of a motor cover (24). The openings (24a) are disposed over 0 to 45% of the height dimension H of the fan rotor (20), with respect to an end section (28) on the non-indrawing side of the fan rotor (20). Accordingly, there is expected to be a reduction in noise because there is less interference between air flowing from the indrawing side of the fan rotor (20) to the discharge side and air flowing out through the openings (24a).

## Description

### TECHNICAL FIELD

The present invention relates to a blower device, and particularly relates to a blower device that uses a centrifugal fan rotor.

### BACKGROUND ART

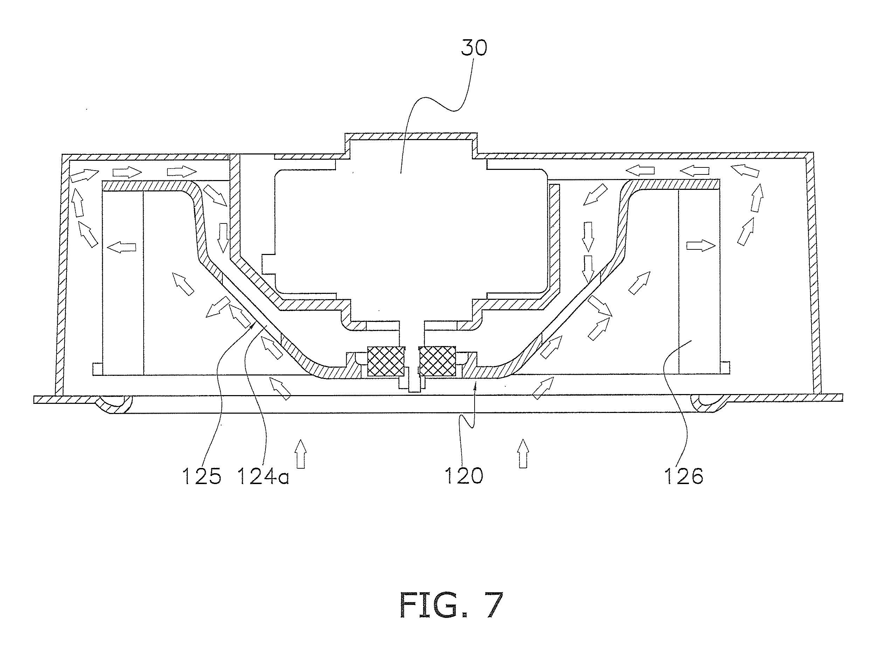

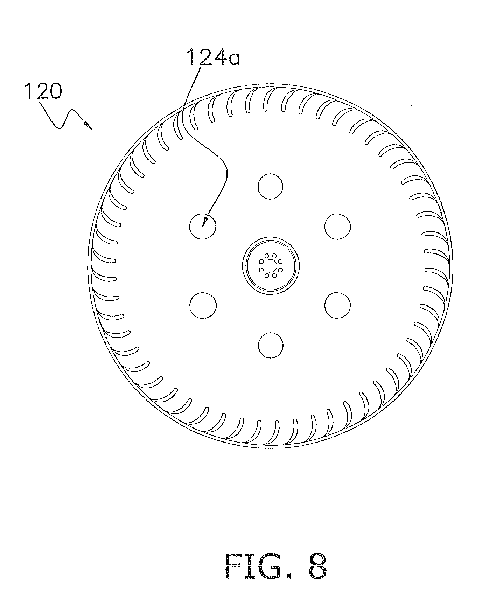

In a blower device comprising a fan rotor of a construction having a motor attached to the side opposite to an air indrawing side, in order to cool the motor, the design is such that some of the discharged air is returned between the motor periphery and a hub encircling the motor so as to cover the external periphery. This design is described while referring to FIGS. 7 and 8.

FIG. 7 is a cross-sectional view of a conventional blower device. FIG. 8 is a front view of the fan rotor in FIG. 7. In FIGS. 7 and 8, air flows from the inner sides of fan blades 126 to the outer sides due to the rotation of the fan rotor 120, and negative pressure is exerted on the surface of a hub 125. Due to openings 124a being provided in advance in the hub 125 and negative pressure being exerted on the surface of a hub 125, the air between the hub 125 and the external periphery of the motor 130 exits through the openings 124a, and some of the discharged air is returned to the space between the hub 125 and the external periphery of the motor 130 so as to compensate for the lost air. The same configuration is also disclosed in paragraph [0005] of Patent Literature 1 (Japanese Laid-open Patent Application No. 2000-50602).

### SUMMARY OF THE INVENTION

### <Technical Problem>

However, in a blower device such as the one described above, an increase in blowing noise is observed as an effect of the openings 124a being provided. This is presumably due to interference between air flowing along the hub 125 and air flowing out through the openings 124a, because the openings 124a are provided to the top of the hub 125 (the portion near the air indrawing side).

An object of the present invention is to provide a blower device in which such blowing noise is reduced.

### <Solution to Problem>

A blower device according to a first aspect of the present invention comprises a centrifugal fan rotor and a motor. The centrifugal fan rotor blows out indrawn air in a direction orthogonal to the indrawing direction. The motor rotates the centrifugal fan rotor. The centrifugal fan rotor has a motor cover in proximity to the external peripheral surface of the motor. Openings are provided at a lower part of the motor cover, and a motor-cooling air passage is formed at a lower part of the motor cover. The motor-cooling air passage is a passage into which some of the air blown out from the centrifugal fan rotor through the openings is discharged after the air has been led to a motor-surrounding space formed between the centrifugal fan rotor and the motor.

In this blower device, the air flowing from the motor-cooling air passage into the space surrounding the motor cools the motor and flows out through the openings in the motor cover. At this time, the air flowing from the indrawing side of the centrifugal fan rotor to the discharge side and the air flowing out through the openings in the motor cover both flow in the centrifugal direction of the centrifugal fan rotor, and there is therefore less interference between the two air flows. Interference between these air flows is presumed to be the cause of the increase in blowing noise, and there is expected to be a reduction in noise because there is less of this interference.

A blower device according to a second aspect of the present invention is the blower device according to the first aspect, wherein the openings are disposed over 0 to 45% of a height dimension of the centrifugal fan rotor relative to an end section of the centrifugal fan rotor on a non-indrawing side, the height dimension being the dimension oriented in the direction of a rotating shaft.

In this blower device, similar to the blower device according to the first aspect of the present invention, there is expected to be a reduction in noise because there is less interference between the air flowing from the indrawing side of the centrifugal fan rotor to the discharge side and the air flowing out through the openings in the motor cover.

A blower device according to a third aspect of the present invention is the blower device according to the second aspect, wherein the area of the motor cover occupied by the openings constitutes 60 to 80% of the area of the portion disposed over 0 to 45% of the height dimension of the centrifugal fan rotor.

In this blower device, there is less passage resistance against the air flowing out through the openings, and the necessary rigidity of the centrifugal fan rotor is maintained.

A blower device according to a fourth aspect of the present invention is the blower device according to the second aspect, wherein the openings are disposed over 0 to 25% of the height dimension of the centrifugal fan rotor.

According to the results of experiments conducted by the applicant, in comparison to a blower device in which the openings are provided to other positions, the rotational speed needed in order to achieve the same airflow rate is lower and blowing noise is also lower.

A blower device according to a fifth aspect of the present invention is the blower device according to the first aspect, wherein the motor cover includes an inclined surface. The inclined surface is inclined relative to a rotating shaft of the motor and the inclined surface extends to an end section on a non-indrawing side of the centrifugal fan rotor. The openings are disposed on the non-indrawing-side base of the inclined surface.

In this blower device, air taken into the centrifugal fan rotor flows along the inclined surface of the motor cover, and the air is deflected in the centrifugal direction by the base portion of the inclined surface. If the openings were to be provided in the middle of the inclined surface, the air flowing along the inclined surface and the air flowing out through the openings would interfere with each other, causing an increase in blowing noise.

However, when the openings span through the base portion of the inclined surface, a large part of the air flowing out through the openings flows out from the base portion of the inclined surface, and the air outflow direction is the centrifugal direction. Accordingly, there is less interference between the air flowing along the inclined surface and the air flowing out through the openings. The interference between these air flows is presumed to be the cause of increases in blowing noise, and a noise reduction is expected because there is less of this interference.

A blower device according to the sixth aspect of the present invention is the blower device according to the first aspect, wherein the motor cover includes an inclined surface and a vertical surface. The inclined surface is inclined relative to a rotating shaft of the motor and the inclined surface extends to an end section on a non-indrawing side of the centrifugal fan rotor. The vertical surface extends substantially parallel to the rotating shaft and the vertical surface from a terminal end of the inclined surface to the end section. The openings are disposed on the non-indrawing-side base of the vertical surface.

In this blower device, a large part of the air flowing out through the openings flows out from the base portion of the vertical surface, and the air outflow direction is the centrifugal direction. The air flowing along the inclined surface flows in the centrifugal direction in proximity to the terminal end of the inclined surface. Accordingly, there is less interference between the air flowing along the inclined surface and the air flowing out through the openings. The interference between these air flows is presumed to be the cause of increases in blowing noise, and a noise reduction is expected because there is less of this interference.

A blower device according to a seventh aspect of the present invention is the blower device according to the first aspect, wherein the centrifugal fan rotor further has a fixed section and a plurality of fan blades. The fixed section holds the rotating shaft of the motor. The fan blades are arranged in positions separated outward in the radial direction from the fixed section. The motor cover joins the fixed section and an end section on a non-indrawing side in the longitudinal direction of the fan blades.

In this blower device, because the air heading to the fan blades and the air flowing out through the openings cross in a substantially parallel fashion, there is less interference between these air flows. The interference between these air flows is presumed to be the cause of increases in blowing noise, and a noise reduction is expected because there is less of this interference.

A blower device according to an eighth aspect of the present invention is the blower device according to the first aspect, wherein the centrifugal fan rotor is a sirocco fan rotor configured from a hub, a main plate, and a plurality of fan blades. Integrated in the hub are a fixed section for holding a rotating shaft of the motor and the motor cover. The main plate encircles the periphery of the hub. The fan blades are arranged in a cylindrical formation along the external periphery of the main plate.

In this blower device, because the air heading to the fan blades and the air flowing out through the openings cross in a substantially parallel fashion, there is less interference between these air flows. The interference between these air flows is presumed to be the cause of increases in blowing noise, and a noise reduction is expected because there is less of this interference.

A blower device according to a ninth aspect of the present invention is the blower device according to the eighth aspect, wherein the ratio of the shortest distance between the motor cover and the fan blades to the maximum radius of the hub is 0.1 to 0.3.

In this blower device, when the ratio of the shortest distance between the motor cover and the fan blades to the maximum radius of the hub is 0.1 to 0.3, the indrawn air readily flows along the hub and the increase in blowing noise is suppressed.

A blower device according to a tenth aspect of the present invention is the blower device according to the eighth aspect, wherein the ratio of the outside diameter of the centrifugal fan rotor to the outside diameter of the motor is 3.0 or less.

In this blower device, when the ratio of the outside diameter of the centrifugal fan rotor to the outside diameter of the motor is 3.0 or less, the indrawn air can be made to readily flow along the hub.

### <Advantageous Effects of Invention>

In the blower device according to the first or second aspect of the present invention, there is expected to be a reduction in noise because there is less interference between air flowing from the indrawing side of the centrifugal fan rotor to the discharge side and air flowing out through the openings in the motor cover.

In the blower device according to the third aspect of the present invention, there is less passage resistance against the air flowing out through the openings, and the necessary rigidity of the centrifugal fan rotor is maintained.

In the blower device according to the fourth aspect of the present invention, in comparison to a blower device in which the openings are provided to other positions, the rotational speed needed in order to achieve the same airflow rate is lower and blowing noise is also lower.

In the blower device according to the fifth or sixth aspect of the present invention, there is expected to be a reduction in noise because there is less interference between air flowing along the inclined surface and air flowing out through the openings.

In the blower device according to the seventh or eighth aspect of the present invention, the end sections of the fan blades and the end section of the motor cover are in positions of substantially the same height, and the air heading to the fan blades and the air flowing out through the openings cross in a substantially parallel fashion. As a result, there is expected to be a reduction in noise because there is less interference between these air flows.

In the blower device according to the ninth aspect of the present invention, the indrawn air readily flows along the hub and the increase in blowing noise is suppressed.

In the blower device according to the tenth aspect of the present invention, the indrawn air can be made to readily flow along the hub.

### BRIEF DESCRIPTION OF THE DRAWINGS

FIG. 1 is a cross-sectional view of a blower device according to an embodiment of the present invention.
FIG. 2A is a front view of the fan rotor of the blower device according to the present embodiment.
FIG. 2B is a cross-sectional view along line L1-L1 in FIG. 2A.
FIG. 3A is a front view of a second sample of the fan rotor.
FIG. 3B is a cross-sectional view along line L2-L2 in FIG. 3A.
FIG. 4A is a front view of a third sample of the fan rotor.
FIG. 4B is a cross-sectional view along line L3-L3 in FIG. 4A.
FIG. 5 is a graph showing the relationship between airflow rate and noise in the blower devices in which the first through third samples of the fan rotor were implemented.
FIG. 6 is a graph showing the relationship between airflow rate and rotational speed in the blower device in which the first sample of the fan rotor was implemented.
FIG. 7 is a cross-sectional view showing a conventional blower device.
FIG. 8 is a front view of the fan rotor in FIG. 7.

### DESCRIPTION OF EMBODIMENTS

An embodiment of the present invention is described hereinbelow while referring to the drawings. The following embodiment is a specific example of the present invention and is not intended to limit the technological scope of the present invention.

### (1) Configuration of blower device

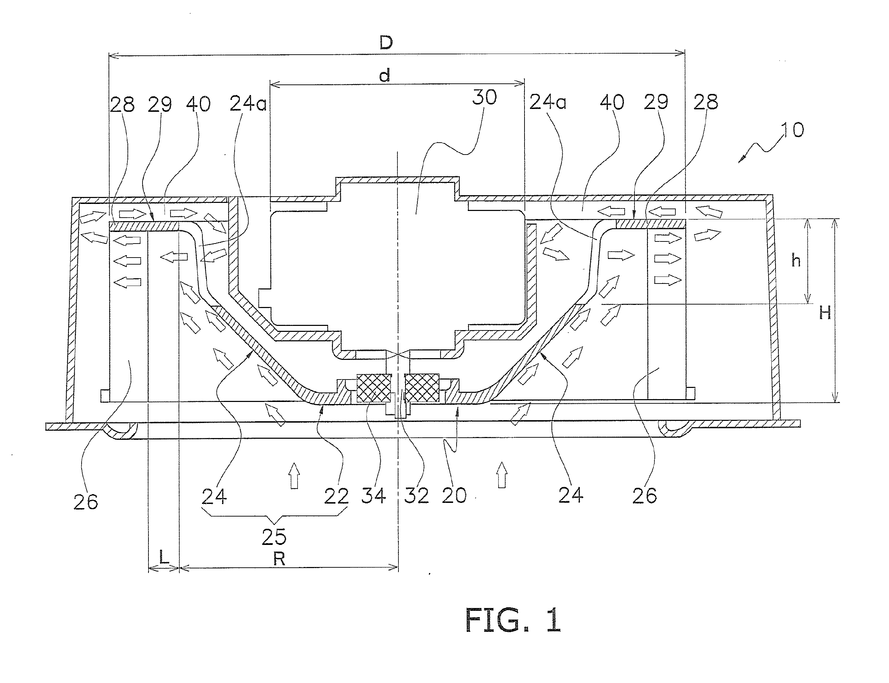

FIG. 1 is a cross-sectional view of the blower device according to one embodiment of the present invention. In FIG. 1, a blower device 10 is a sirocco fan comprising a fan rotor 20 and a motor 30 for rotating the fan rotor 20. The motor 30 has a rotating shaft 32, and the fan rotor 20 is fixed to this rotating shaft 32 via a fan boss 34. Therefore, the fan rotor 20 is rotated by the rotation of the motor 30.

When the fan rotor 20 rotates, air is taken in from a fixed section 22 side along the direction of the rotating shaft, the air proceeds along the inclined surface of a motor cover 24, and the air is then blown out in a direction orthogonal to the indrawing direction.

Some of the blown out air is led to the space surrounding the motor 30 formed between the fan rotor 20 and the motor 30. Openings 24a are provided in advance in the fan rotor 20, and after the air led to the space surrounding the motor 30 has cooled the external peripheral surface of the motor 30, the air is discharged through the openings 24a. The route through which this air flows is referred to as a motor-cooling air passage 40.

### (2) Specific configuration of fan rotor

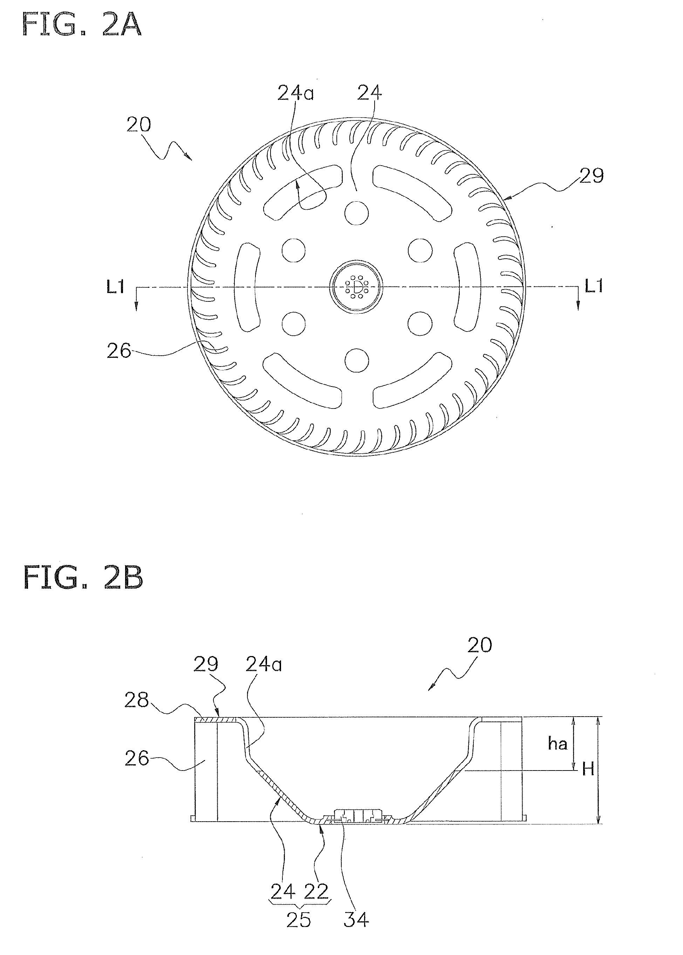

FIG. 2A is a front view of the fan rotor of the blower device according to the present embodiment. FIG. 2B is a cross-sectional view along line L1-L1 in FIG. 2A. In FIGS. 2A and 2B, the fan rotor 20 is configured from a hub 25, a main plate 29, and a plurality of fan blades 26.

### (2-1) Hub

The hub 25 is a member in which the fixed section 22 supporting the rotating shaft 32 of the motor 30 and the motor cover 24 in proximity to the external peripheral surface of the motor 30 are formed integrally.

Referring to the air indrawing side half of the motor cover 24 as the top section and the opposite half as the lower part, the openings 24a are provided in the lower part of the motor cover 24. The height hb of one edge of each opening 24a is in a position of 0% of the height dimension H, with respect to an end section 28 on the non-indrawing side of the fan rotor 20, and the height ha of the other edge is in a position of 45%. The height dimension H herein is the dimension of the rotating shaft direction of the fan rotor 20, as shown in FIG. 2. In other words, the openings 24a encompass the space from the position of 0% of the height dimension H to the position of 45%, with respect to the end section 28 on the non-indrawing side of the fan rotor 20.

The percentage of area of the openings 24a in the motor cover 24 is 60 to 80% relative to the area of the portion disposed over 0 to 45% of the height dimension of the fan rotor 20. This area percentage of the openings 24a allows the passage resistance of air flowing from the openings to be suppressed and the necessary rigidity of the fan rotor 20 to be maintained.

### (2-2) Main plate and fan blades

The main plate 29 encircles the periphery of the hub 25, and the fan blades 26 are arranged in a cylindrical formation along the external periphery of the main plate 29. The main plate 29 also serves as the end section 28 in the non-indrawing side of the fan blades 26 in the longitudinal direction. The motor cover 24 joins the fixed section 22 and the end section 28 together.

### (3) Noise of blower device

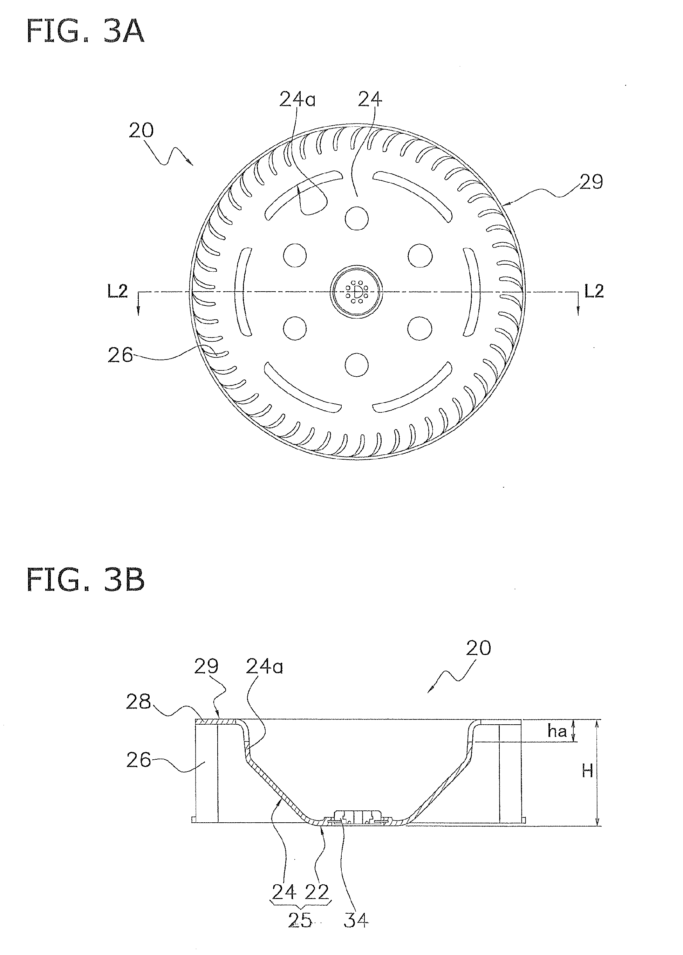

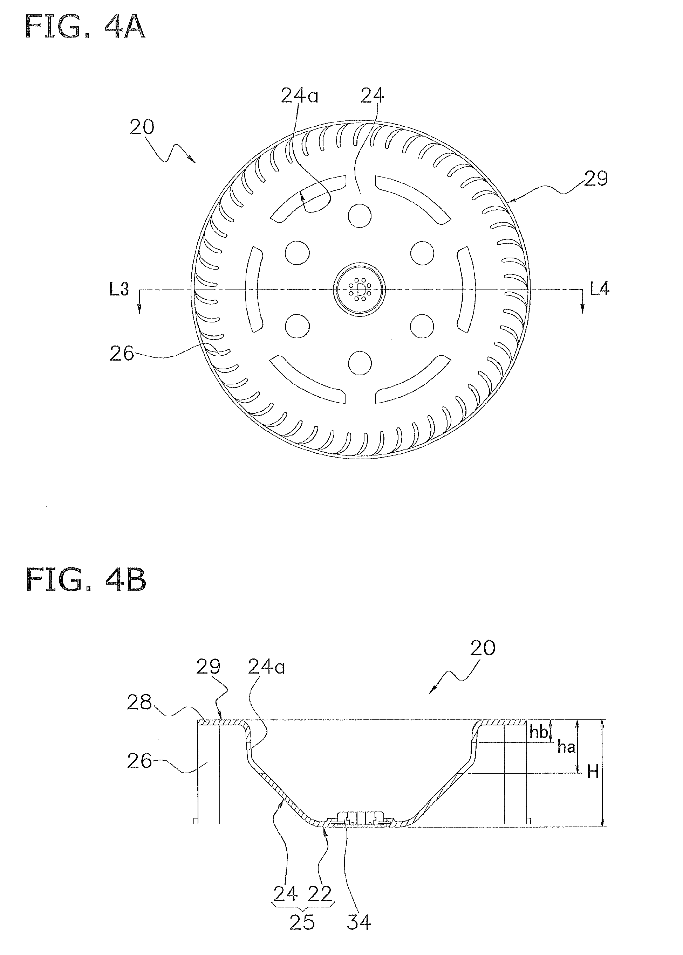

Next, to find the optimal positions of the openings 24a, first through third samples of the fan rotor 20 having different positions of the openings 24a were created, and noise was measured relative to airflow rate when the samples were implemented in a blower device. The specifications and noise measurement results of the samples are described hereinbelow. The first sample is not described because the first sample is the same as the fan rotor 20 (see FIG. 2) of the blower device according to the present embodiment, and the positions of the openings 24a in the second and third samples are described herein while referring to FIGS. 3 and 4.

### (3-1) Fan rotor sample specifcations

FIG. 3A is a front view of the second sample of the fan rotor, and FIG. 3B is a cross-sectional view along line L2-L2 in FIG. 3A. In FIGS. 3A and 3B, in the second sample of the fan rotor 20, the height hb of one edge of each opening 24a is in a position of 0% of the height dimension H, and the height ha of the other edge is in a position of 25%. In other words, the openings 24a encompass the space from the position of 0% of the height dimension H to the position of 25%, with respect to the end section 28 on the non-indrawing side of the fan rotor 20.

FIG. 4A is a front view of a third sample of the fan rotor, and FIG. 4B is a cross-sectional view along line L3-L3 in FIG. 4A. In FIGS. 4A and 4B, in the third sample of the fan rotor 20, the height hb of one edge of each opening 24a is in a position of 25% of the height dimension H, and the height ha of the other edge is in a position of 45%, with respect to the end section 28 on the non-indrawing side of the fan rotor 20. In other words, the openings 24a encompass the space from the position of 25% of the height dimension H to the position of 45%, with respect to the end section 28 on the non-indrawing side of the fan rotor 20.

### (3-2) Noise comparison results

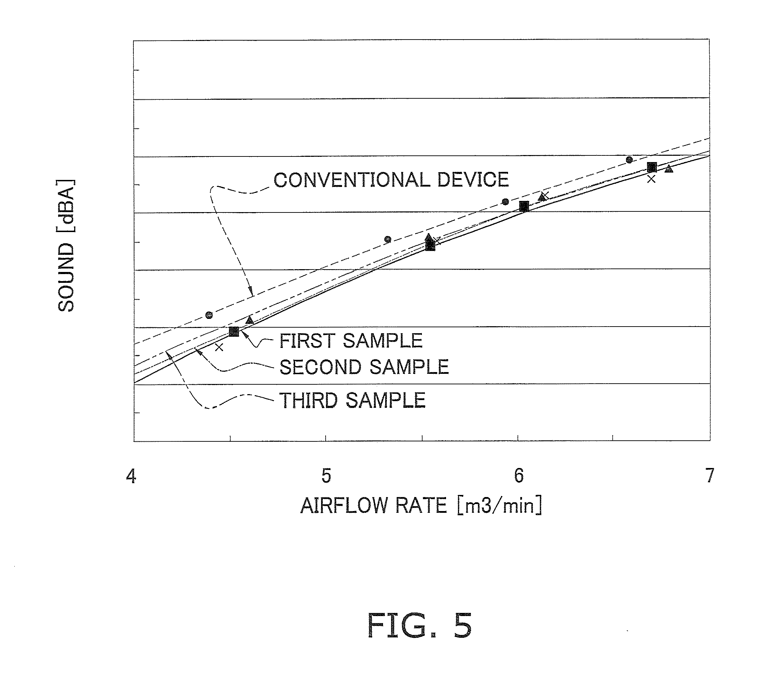

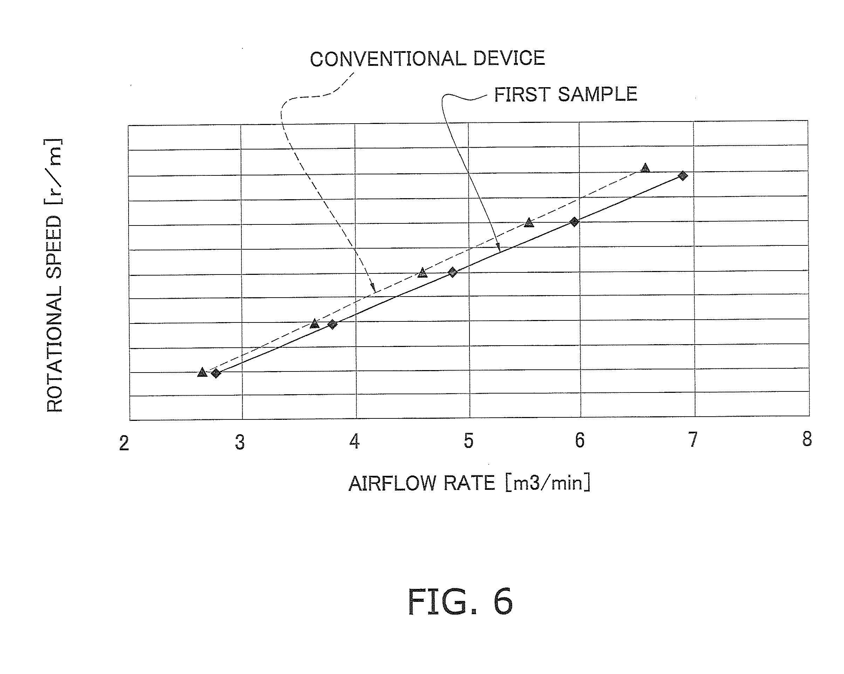

FIG. 5 is a graph showing the relationship between airflow rate and noise in the blower devices in which the first through third samples of the fan rotor were implemented. Of the four curves in FIG. 5, the curve shown as a solid line is the measurement results of the blower device having the first sample, the curve shown as a single-dash line is the measurement results of the blower device having the second sample, and the curve shown as a double-dash line is the measurement results of the blower device having the third sample. The curve shown as a dashed line is the measurement results of a conventional blower device shown in FIG. 6.

The noise of the blower devices having the first, second, and third samples is lower than the noise of the blower device having the conventional fan rotor, as shown in FIG. 5. Concerning these results, the applicant presumes that "because the air flowing from the indrawing side of the fan rotor 20 to the discharge side and the air flowing out from the openings 24a of the motor cover 24 both flow in the centrifugal direction of the fan rotor 20, there is less interference between the two air flows and blowing noise is reduced."

In a comparison of the noise values of the blower devices having the first, second, and third samples of the fan rotor 20, the blower device having the first sample of the fan rotor 20 has the lowest noise value, the blower device having the second sample has the second lowest value, and the blower device having the third sample has the third lowest value. Because the difference is smaller than the difference with the blower device having the conventional fan rotor, the openings 24a of the fan rotor 20 are preferably provided so as to be disposed over 0 to 45% of the height dimension H.

When the range of 0 to 45% of the height dimension H is too large for the openings due to structural restrictions, the openings are preferably provided so as to be disposed over either 0 to 25% of the height dimension H or 25 to 45% of the height dimension H, and considering the results shown in FIG. 5, the openings 24a are preferably provided so as to be disposed over 0 to 25% of the height dimension H.

The first, second, and third samples of the fan rotor 20 used by the applicant in the experiments have the same specifications as though openings 124a were left in conventional opening positions. However, the applicant has confirmed that the same results as those shown in FIG. 5 are obtained even with the conventional openings 124a closed. It is presumed that because air passing through the motor-cooling air passage 40 exits through the openings 24a without reaching the conventional openings 124a, the conventional openings 124a serve no function.

As described above, if the openings 24a are disposed over 0 to 45% of the height dimension H, the same level of noise is achieved in any of the blower devices having the first, second, and third samples of the fan rotor 20.

The openings 24a disposed over 0 to 45% of the height dimension H means that the openings 24a are partially or entirely located in positions at 0 to 45% of the height dimension H. Even if the height ha of the higher edges of the openings 24a is in a position exceeding 45% of the height dimension H (0.45 < ha/H), the openings are assessed as being disposed over 0 to 45% of the height dimension H if the height hb of the lower edge of the openings 24a is within the range of 0 to 45% of the height dimension H (0 < hb/H < 0.45).

Due to the openings 24a being provided so as to be disposed over 0 to 45% of the height dimension H, the effect achieved is that less rotational speed is needed in order to achieve the same airflow rate. This is described hereinbelow using FIG. 6.

FIG. 6 is a graph showing the relationship between airflow rate and rotational speed in the blower device having the first sample of the fan rotor. In FIG. 6, the characteristics of the blower device having the first sample of the fan rotor 20 are shown by the solid line. The characteristics of the conventional blower device are shown by the dashed line. It is clear from FIG. 6 that in the blower device having the first sample of the fan rotor 20, the rotational speed needed in order to achieve the same airflow rate is less than that of the conventional blower device.

### (4) Characteristics

### (4-1)

The blower device 10 is a sirocco fan in which the fan rotor 20 is configured from the hub 25, the main plate 29, and a plurality of fan blades 26. In the blower device 10, the openings 24a are provided in the lower part (the non-indrawing side) of the motor cover 24. The openings 24a are disposed over 0 to 45% of the height dimension H of the fan rotor 20, with respect to the end section 28 of the non-indrawing side of the fan rotor 20. Accordingly, there is expected to be a noise reduction because there is less interference between the air flowing from the indrawing side of the fan rotor 20 to the discharge side and the air flowing out through the openings 24a.

### (4-2)

In the motor cover 24, if the percentage of area of the openings 24a is 60 to 80% relative to the area of the portion disposed over 0 to 45% of the height dimension of the centrifugal fan rotor, there is less passage resistance against the air flowing out through the openings 24a, and the required rigidity of the centrifugal fan rotor is maintained.

### (4-3)

The motor cover 24 includes an inclined surface and a vertical surface, the inclined surface extends toward the end section 28 of the non-indrawing side of the fan rotor 20 at an incline with respect to the rotating shaft 32 of the motor 30, and the vertical surface, which is substantially parallel with the rotating shaft 32, extends from the terminal end of the inclined surface to the end section 28. The openings 24a span through the base of the non-indrawing side of the vertical surface and a large part of the air flowing out through the openings 24a flows out from the base portion of the vertical surface, accordingly, there is less interference between the air flowing along the inclined surface and the air flowing out through the openings.

### (4-4)

In the blower device 10, the air heading to the fan blades 26 and the air flowing out through the openings 24a cross in a substantially parallel fashion, and there is less interference between these air flows.

### (5) Modifications

In the above embodiment, the motor cover 24 includes an inclined surface and a vertical surface and the openings 24a span through the base of the non-indrawing side of the vertical surface, but the configuration is not limited to this example alone.

For example, the openings 24a preferably span through the base of the non-indrawing side of the inclined surface even in a type of device in which the inclined surface of the motor cover 24 is inclined relative to the rotating shaft 32 of the motor 30 and the inclined surface extends to the end section 28 of the non-indrawing side of the fan rotor 20 (a shape such as the one disclosed in FIG. 2 of Patent Literature 1).

In the blower device according to this modification, air taken into the fan rotor 20 flows along the inclined surface of the motor cover 24, and the air is deflected in the centrifugal direction by the base portion of the inclined surface. A large part of the air flowing out through the openings 24a flows out from the base portion of the inclined surface, and the air outflow direction is the centrifugal direction. Accordingly, there is less interference between the air flowing along the inclined surface and the air flowing out through the openings.

### <Other embodiments>

### (1)

In FIG. 1, the applicant has confirmed that under the condition that the outside diameter D of the centrifugal fan rotor 20 not be changed, when there is a change in the ratio between the shortest distance L of the motor cover 24 and the fan blades 26 to the maximum radius R of the hub 25 and this ratio is within a predetermined range, the indrawn air readily flows along the hub 25 and there is less blowing noise. Specifically, these results are expected when this ratio (L/R) is within a range of 0.1 to 0.3.

### (2)

Furthermore, the applicant has confirmed that when the ratio of the outside diameter D of the centrifugal fan rotor 20 to the outside diameter d of the motor 30 (D/d) is 3.0 or less, the indrawn air will easily be made to flow along the hub 25.

### INDUSTRIAL APPLICABILITY

As described above, according to the present invention, in a blower device provided with openings through which motor-cooling air flows, there is less of an increase in blowing noise presumed to be due to the air flowing through the openings, and the blower device is therefore useful in centrifugal fans including sirocco fans.

### REFERENCE SIGNS LIST

| | |
|---|---|
| 20 | Fan rotor |
| 22 | Fixed section |
| 24 | Motor cover |
| 24a | Openings |
| 25 | Hub |
| 26 | Fan blades |
| 28 | End section |
| 29 | Main plate |
| 30 | Motor |
| 32 | Rotating shaft |
| 40 | Motor-cooling air passage |

### CITATION LIST

### PATENT LITERATURE

[Patent Literature 1] Japanese Laid-open Patent Application No. 2000-50602

## Claims

1. A blower device comprising:
a centrifugal fan rotor (20) for blowing out indrawn air in a direction orthogonal to the indrawing direction; and
a motor (30) for rotating the centrifugal fan rotor (20);
the centrifugal fan rotor (20) having a motor cover (24) in proximity to the external peripheral surface of the motor (30); and
openings (24a) being provided at a lower part of the motor cover (24), and a motor-cooling air passage (40) being formed, which some of the air blown out from the centrifugal fan rotor (20) being led to a motor-surrounding space formed between the centrifugal fan rotor (20) and the motor (30) and then being discharged through the openings (24a).

2. The blower device according to claim 1,
the openings (24a) being disposed over 0 to 45% of a height dimension of the centrifugal fan rotor (20) relative to an end section (28) of the centrifugal fan rotor (20) on a non-indrawing side, the height dimension being the dimension oriented in the direction of a rotating shaft.

3. The blower device according to claim 2,
the area of the motor cover (24) occupied by the openings (24a) constituting 60 to 80% of the area of the portion disposed over 0 to 45% of the height dimension of the centrifugal fan rotor (20).

4. The blower device according to claim 2,
the openings (24a) being disposed over 0 to 25% of the height dimension of the centrifugal fan rotor (20).

5. The blower device according to claim 1,
the motor cover (24) including an inclined surface inclined relative to a rotating shaft of the motor (30) and extending to an end section (28) on an non-indrawing side of the centrifugal fan rotor (20), and
the openings (24a) being disposed on the non-indrawing-side base of the inclined surface.

6. The blower device according to claim 1, the motor cover (24) including:
an inclined surface inclined relative to a rotating shaft (32) of the motor (30) and extending toward an end section (28) on a non-indrawing side of the centrifugal fan rotor (20); and
a vertical surface extending substantially parallel to the rotating shaft (32) from a terminal end of the inclined surface to the end section (28); and
the openings (24a) being disposed on the non-indrawing-side base of the vertical surface.

7. The blower device according to claim 1, the centrifugal fan rotor (20) further including:
a fixed section (22) for holding a rotating shaft (32) of the motor (30); and
a plurality of fan blades (26) arranged in positions separated outward in the radial direction from the fixed section (22); and
the motor cover (24) joining the fixed section (22) and an end section (28) of a non-indrawing side in the longitudinal direction of the fan blades (26).

8. The blower device according to claim 1, the centrifugal fan rotor (20) being a sirocco fan rotor comprising:
a hub (25) in which a fixed section (22) for holding a rotating shaft (32) of the motor (30) and the motor cover (24) are integrated;
a main plate (29) encircling the periphery of the hub (25); and
a plurality of fan blades (26) arranged in a cylindrical formation along the external periphery of the main plate (29).

9. The blower device according to claim 8,
the ratio of the shortest distance (L) between the motor cover (24) and the fan blades (26) to the maximum radius (R) of the hub (25) being 0.1 to 0.3.

10. The blower device according to claim 8,
the ratio of the outside diameter (D) of the centrifugal fan rotor (20) to the outside diameter (d) of the motor (30) being 3.0 or less.
